# EUROPÄISCHE PATENTSCHRIFT

(11) **EP 3 025 067 B1**
(45) Veröffentlichungstag und Bekanntmachung des Hinweises auf die Patenterteilung: **07.08.2019**
(21) Anmeldenummer: 14741510.3
(22) Anmeldetag: 25.06.2014
(51) Int. Cl.: F16D 13/58, F16D 13/71

(54) **REIBUNGSKUPPLUNGSEINRICHTUNG**
FRICTION CLUTCH DEVICE
DISPOSITIF D'EMBRAYAGE À FRICTION

(30) Priorität: 23.07.2013 DE 102013214372
(43) Veröffentlichungstag der Anmeldung: 01.06.2016
(73) Patentinhaber: Schaeffler Technologies AG & Co. KG, 91074 Herzogenaurach (DE)
(72) Erfinder: KELLER, Marion, 77815 Bühl (DE); HEUBERGER, Sebastian, 77855 Achern (DE); RABER, Christoph, 66564 Ottweiler-Steinbach (DE)
(86) Internationale Anmeldenummer: PCT/DE2014/200280
(87) Internationale Veröffentlichungsnummer: WO 2015/010694

(56) Entgegenhaltungen:
- WO-A1-98/39574
- WO-A1-03/087606
- DE-A1- 4 013 186
- DE-A1- 4 132 349
- DE-A1- 4 430 249
- DE-A1- 19 958 044
- DE-A1-102011 011 919
- DE-U1- 29 508 091
- FR-A1- 2 775 038
- GB-A- 2 305 698
- US-A1- 2002 179 398
- US-B1- 6 325 192

## Beschreibung

Die Erfindung betrifft eine Reibungskupplungseinrichtung gemäß dem Oberbegriff des Patentanspruchs 1. Insbesondere betrifft die vorliegende Erfindung eine Reibungskupplungseinrichtung für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Erstreckungsrichtung der Drehachse verlagerbare Anpressplatte, eine erste Feder zur Beaufschlagung der wenigstens einen Anpressplatte und eine zweite Feder zur Reduzierung einer Betätigungskraft.

Aus der nicht vorveröffentlichten WO 2014/056495 A1 ist eine Reibungskupplungseinrichtung bekannt, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte und eine zweite Feder zur Reduzierung einer Betätigungskraft in einem Verschleißzustand, bei der die zweite Feder in axialer Richtung zwischen dem Gehäuse und der ersten Feder angeordnet ist.

Der WO 2014/056495 A1 zufolge ist die erste Feder eine Tellerfeder mit Federzungen und die zweite Feder stützt sich unmittelbar an den Federzungen ab. Gehäuseseitig dient eine definierte Kante oder ein Drahtring als Schwenklager für die zweite Feder. Zur Lagerung der Tellerfeder an dem Gehäuse dienen Distanzbolzen. Die Distanzbolzen weisen jeweils einen mehrfach gestuften Querschnitt mit einer ersten Stufe und einer zweiten Stufe auf. Mithilfe der ersten Stufen der Distanzbolzen ist ein Freiraum für die zweite Feder gebildet.

Außerdem ist aus der WO 2014/056495 A1 eine Reibungskupplungseinrichtung bekannt, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte, an dem Gehäuse angeordnete Distanzbolzen zur Fixierung und Lagerung der ersten Feder, einen anpressplattenseitig der ersten Feder angeordneten Drahtring und eine zweite Feder zur Reduzierung einer Betätigungskraft in einem Verschleißzustand, bei der die zweite Feder anpressplattenseitig des Drahtrings an den Distanzbolzen verschwenkbar gelagert ist.

Eine Reibungskupplungseinrichtung, die auf den Oberbegriff des Patentanspruchs 1 lesbar ist, ist aus der GB 2 305 698 A und aus der DE 41 32 349 A1 bekannt.

Der Erfindung liegt die Aufgabe zugrunde, eine eingangs genannte Reibungskupplungseinrichtung baulich und/oder funktional zu verbessern. Insbesondere soll eine Reduzierung einer Betätigungskraft mit verringertem Aufwand ermöglicht sein. Insbesondere soll eine Ausrücckraftreduzierung mit reduziertem Aufwand ermöglicht sein. Insbesondere soll eine Betriebssicherheit verbessert sein. Insbesondere soll ein Einstellaufwand reduziert sein oder entfallen. Insbesondere soll ein einwandfreies Reduzieren der Ausrückkräfte gewährleistet sein. Insbesondere soll eine Teileanzahl reduziert sein. Insbesondere soll eine Toleranzsituation verbessert sein. Insbesondere soll ein wirksamer Verschleißbereich vergrößert sein. Insbesondere soll ein Bauraumbedarf reduziert sein. Insbesondere soll eine Adaption einer Ausrückkraftreduzierung für eine konventionelle Reibungskupplungseinrichtung erleichtert sein. Insbesondere soll eine Servofeder zumindest weitestgehend mithilfe bereits vorhandener Komponenten einbindbar sein. Insbesondere soll mithilfe einer Servofeder eine maximale Ausrückkraft niedrig gehalten sein und zugleich soll eine Anpresskraft einen vorgegebenen Minimalwert nicht unterschreiten.

Die Lösung der Aufgabe erfolgt erfindungsgemäß mit einer Reibungskupplungseinrichtung gemäß Patentanspruch 1. Bevorzugte Ausführungsbeispiele der Erfindung sind in den abhängigen Patentansprüchen dargelegt.

Der Antriebsstrang kann eine Brennkraftmaschine aufweisen. Der Antriebsstrang kann einen Drehschwingungsdämpfer aufweisen. Der Antriebsstrang kann ein Getriebe aufweisen. Der Antriebsstrang kann wenigsten ein antreibbares Rad aufweisen. Die Reibungskupplungseinrichtung kann in dem Antriebsstrang anordenbar sein. Die Reibungskupplungseinrichtung kann zwischen der Brennkraftmaschine und dem Getriebe anordenbar sein. Die Reibungskupplungseinrichtung kann zwischen dem Drehschwingungsdämpfer und dem Getriebe anordenbar sein.

Die Reibungskupplungseinrichtung kann ein Eingangsteil aufweisen. Die Reibungskupplungseinrichtung kann ein Ausgangsteil aufweisen. Die Reibungskupplungseinrichtung kann ein Gehäuse aufweisen. Das Gehäuse kann auch als Deckel bezeichnet werden. Das Eingangsteil kann mithilfe der Brennkraftmaschine antreibbar sein. Mithilfe des Ausgangsteils kann das Getriebe antreibbar sein. Die Reibungskupplungseinrichtung kann ein Anfahren sowie einen Wechsel einer Getriebeübersetzung ermöglichen.

Die Reibungskupplungseinrichtung kann eine Einfachkupplung aufweisen. Die Reibungskupplungseinrichtung kann eine Doppelkupplung aufweisen. Die Reibungskupplungseinrichtung kann eine trockene Kupplung aufweisen. Die Reibungskupplungseinrichtung kann eine nasse Kupplung aufweisen. Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine selbsttätig öffnende Kupplung aufweisen. Die Reibungskupplungseinrichtung kann eine selbsttätig schließende Kupplung aufweisen. Die Reibungskupplungseinrichtung kann eine gedrückte Kupplung aufweisen. Die Reibungskupplungseinrichtung kann eine gezogene Kupplung aufweisen. Die Reibungskupplungseinrichtung kann mithilfe eines Kupplungspedals betätigbar sein. Die Reibungskupplungseinrichtung kann automatisiert betätigbar sein.

Die Reibungskupplungseinrichtung kann ausgehend von einer vollständig ausgerückten Betätigungsstellung, in der zwischen dem Eingangsteil und dem Ausgangsteil im Wesentlichen keine Leistungsübertragung erfolgt, bis hin zu einer vollständig eingerückten Betätigungsstellung, in der zwischen dem Eingangsteil und dem Ausgangsteil im Wesentlichen eine vollständige Leistungsübertragung erfolgt, betätigungsabhängig eine zunehmende mechanische Leistungsübertragung ermöglichen, wobei eine Leistungsübertragung zwischen dem Eingangsteil und dem Ausgangsteil reibschlüssig erfolgt. Umgekehrt kann ausgehend von einer vollständig eingerückten Betätigungsstellung, in der zwischen dem Eingangsteil und dem Ausgangsteil im Wesentlichen eine vollständige Leistungsübertragung erfolgt, bis hin zu einer vollständig ausgerückten Betätigungsstellung, in der zwischen dem Eingangsteil und dem Ausgangsteil im Wesentlichen keine Leistungsübertragung erfolgt, betätigungsabhängig eine abnehmende mechanische Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die wenigstens eine Anpressplatte und das Gehäuse können miteinander drehfest verbunden sein. Die Reibungskupplungseinrichtung kann wenigstens eine Druckplatte aufweisen. Die wenigstens eine Druckplatte und das Gehäuse können miteinander fest verbunden sein. Die Reibungskupplungseinrichtung kann wenigstens eine Kupplungsscheibe mit Reibbelägen aufweisen. Die wenigstens eine Kupplungsscheibe kann zwischen der wenigstens einen Druckplatte und der wenigstens einen Anpressplatte einklemmbar sein. Das Eingangsteil der Reibungskupplungseinrichtung kann das Gehäuse, die Druckplatte und die wenigstens eine Anpressplatte aufweisen. Das Ausgangsteil der Reibungskupplungseinrichtung kann die Kupplungsscheibe aufweisen.

Die zweite Feder kann sich an der ersten Feder verschleißunabhängig abstützten, um eine Betätigungskraft zu verringern. Die zweite Feder kann sich an der ersten Feder bereits in einem Neuzustand abstützen, um eine Betätigungskraft zu verringern. Die zweite Feder kann vorgespannt eingebaut sein. Die Reibbeläge der Kupplungsscheibe können bei einem Betrieb der Reibungskupplungseinrichtung einem Verschleiß unterliegen. Eine Dicke der Reibbeläge kann sich verschleißbedingt und/oder aufgrund von Setzvorgängen reduzieren. Eine Reduktion der Dicke der Reibbeläge kann in der vollständig ausgerückten Betätigungsstellung eine erhöhte Vorspannkraft der ersten Feder bewirken. Die zweite Feder kann sich an der ersten Feder in einem Verschleißzustand abstützten, um einen verschleißbedingten Betätigungskraftanstieg zu kompensieren. Die zweite Feder kann bezüglich der ersten Feder lose eingebaut sein.

Die Reibungskupplungseinrichtung kann eine Federeinrichtung aufweisen. Die Federeinrichtung kann die erste Feder und die zweite Feder aufweisen. Die erste Feder kann auch als Kupplungsfeder oder Betätigungsfeder bezeichnet werden. Die zweite Feder kann auch als Servofeder bezeichnet werden. Die erste Feder kann in einem Diagramm, in dem auf einer x-Achse ein Betätigungsweg und auf einer y-Achse eine Betätigungskraft aufgetragen ist, eine steigende Kennlinie mit einem lokalen Maximum und einem fallenden Abschnitt aufweisen. Eine Kraft der zweiten Feder kann einer Kraft der ersten Feder entgegen gerichtet sein. Die erste Feder und die zweite Feder können in einem Diagramm, in dem auf einer x-Achse ein Betätigungsweg und auf einer y-Achse eine Betätigungskraft aufgetragen ist, eine gemeinsame Gesamtkennlinie aufweisen. Die Gesamtkennlinie kann einen steigenden Verlauf mit einem lokalen Maximum und einem fallenden Abschnitt aufweisen, wobei aufgrund der Kraft der zweiten Feder das lokale Maximum der Gesamtkennlinie einen gegenüber dem lokalen Maximum der Kennlinie der ersten Feder verringerten Wert und der fallende Abschnitt der Gesamtkennlinie eine gegenüber dem fallenden Abschnitt der Kennlinie der ersten Feder verringerte Steigung aufweist. Die Federeinrichtung kann die Anpressplatte in Schließrichtung vorgespannt beaufschlagen. Die Federeinrichtung kann die Anpressplatte in Öffnungsrichtung vorgespannt beaufschlagen.

Die zweite Feder kann sich mit dem ersten Abstützradius unmittelbar und mit dem zweiten Abstützradius mittelbar oder unmittelbar an dem Gehäuse abstützen. Das Gehäuse kann Abstützabschnitte zur unmittelbaren Abstützung der zweiten Feder mit dem ersten Abstützradius aufweisen. Diese Abstützabschnitte können mit einer radialen Innenkante des Gehäuses gebildet sein. Diese Abstützabschnitte können mit einer kegelförmigen Innenfläche des Gehäuses gebildet sein. Diese Abstützabschnitte können zum Zentrieren der zweiten Feder dienen. Der erste Abstützradius kann kleiner als der zweite Abstützradius sein. Der erste Abstützradius kann größer als der zweite Abstützradius sein.

Die Reibungskupplungseinrichtung kann Distanzelemente zur Lagerung der ersten Feder an dem Gehäuse aufweisen. Die Distanzelemente können jeweils eine bolzenartige Form aufweisen. Die Distanzelemente können jeweils eine flachnietartige Form aufweisen. Die Distanzelemente können jeweils eine mehrfach gestufte Form aufweisen. Die Distanzelemente können jeweils Stufen zur axialen Festlegung aufweisen. Die Distanzelemente können jeweils eine Stufe zur Festlegung der ersten Feder und/oder der zweiten Feder aufweisen. Die Distanzelemente können jeweils einen abschnittsweise unrunden Querschnitt aufweisen. Die Distanzelemente können jeweils einen abschnittsweise asymmetrischen Querschnitt aufweisen. Der abschnittsweise unrunde oder abschnittsweise asymmetrische Querschnitt kann zum Ausrichten und/oder Zentrieren der ersten Feder, der zweiten Feder und/oder eines Drahtrings dienen. Die Distanzelemente können jeweils einen radialen Fortsatz aufweisen. Die radialen Fortsätze der Distanzelemente können zur Abstützung der zweiten Feder dienen. Die Distanzelemente können jeweils nietartig mit einem Setzkopf und einem Schließkopf ausgeführt sein. Die Distanzelemente können jeweils mit dem Gehäuse vernietet sein. Die Distanzelemente können jeweils eine abschnittsweise fasenartige Oberfläche aufweisen. Die Distanzelemente können jeweils eine abschnittsweise kegelartige Oberfläche aufweisen. Die Distanzelemente können jeweils eine abschnittsweise rampenartige Oberfläche aufweisen. Die Reibungskupplungseinrichtung kann wenigstens drei Distanzelemente aufweisen. Die Distanzelemente können in Umfangsrichtung der Reibungskupplungseinrichtung verteilt angeordnet sein.

Die zweite Feder kann sich mit dem zweiten Abstützradius mittelbar oder unmittelbar an den Distanzelementen abstützen. Zur mittelbaren Abstützung der zweiten Feder an den Distanzelementen kann die erste Feder dienen. Die erste Feder kann an den Distanzelementen gelagert sein und die zweite Feder kann sich mit dem zweiten Abstützradius an der ersten Feder abstützen. Die erste Feder kann mit einem Abstützradius an den Distanzelementen gelagert sein und der zweite Abstützradius der zweiten Feder kann dem Abstützradius der ersten Feder entsprechen. Die zweite Feder kann sich mit ihrem zweiten Abstützradius an einem Schwenklagerradius der ersten Feder abstützen. Die zweite Feder kann radial innenseitig laschenartige Abstützabschnitte aufweisen, die zur rückseitigen Abstützung jeweils durch die erste Feder hindurch ragen. Die erste Feder kann Ausnehmungen für die laschenartige Abstützabschnitte der zweiten Feder aufweisen. Die laschenartigen Abstützabschnitte der zweiten Feder können an Ihren Enden zur rückseitigen Abstützung an der ersten Feder jeweils Hinterschnittabschnitte aufweisen. Die Reibungskupplungseinrichtung kann mit den Distanzelementen fest verbundene Stützfedern aufweisen. Die Stützfedern können zur mittelbaren Abstützung der zweiten Feder an den Distanzelementen dienen. Die zweite Feder kann sich mit dem zweiten Abstützradius an den Stützfedern abstützen. Die Stützfedern können jeweils eine klammerartig gebogene Form mit zwei Schenkeln aufweisen. Die Stützfedern können jeweils Löcher zur Verbindung mit den Distanzelementen aufweisen. Die erste Feder kann an den Stützfedern gelagert sein. Die zweite Feder kann radial außenseitig laschenartige Abstützabschnitte aufweisen, die zur Abstützung an den Distanzelementen jeweils durch die erste Feder hindurch ragen.

Das Gehäuse kann laschenartige Abstützabschnitte zur unmittelbaren Abstützung der zweiten Feder mit dem zweiten Abstützradius aufweisen. Diese Abstützabschnitte können aus dem Gehäuse nach innen ausgeformt sein und eine hakenartige Form aufweisen. Die zweite Feder kann radial außenseitig Fortsätze aufweisen, die mit den Abstützabschnitten des Gehäuses bajonettverschlussartig korrespondieren.

Die zweite Feder kann radial außenseitig Ausnehmungen aufweisen, die mit den Distanzelementen korrespondieren. Die Ausnehmungen der zweiten Feder können seitlich durch Stege begrenzt sein. Die zweite Feder kann zur zusätzlichen Abstützung an der ersten Feder Auflageabschnitte aufweisen, die durch abschnittsweises Umformen der zweiten Feder gebildet sind. Die Auflageabschnitte der zweiten Feder können durch Umbiegen oder Anprägen hergestellt sein.

Das Gehäuse kann zur Abstützung der ersten Feder abschnittsweise sickenartig umgeformt sein. Es können Sicken als nach innen gerichtete Eindrückungen des Gehäuses ausgebildet sein. Das Gehäuse kann zur Abstützung der zweiten Feder mit dem zweiten Abstützradius umformbare laschenartige Abstützabschnitte aufweisen. Diese Abstützabschnitte können zunächst in etwa senkrecht zu einer Gehäusefläche nach innen gebogen und nach Einfügen der zweiten Feder wieder teilweise zurück gebogen sein, um eine Abstützung für die zweite Feder zu bilden.

Zusammenfassend und mit anderen Worten dargestellt ergeben sich somit durch die Erfindung unter anderem Varianten eines Serienkonzepts für eine Servofederkupplung. Eine konstruktive Ausführung kann durch folgende Punkte gekennzeichnet sein: möglichst konstant bleibende Anpresskraft; konstanter Abhub im Verschleiß; Reduzierung einer Ausrückkraft im Verschleiß; Reduzierung einer Pedalkraft; erlaubt einen Einsatz einer steileren Kennlinie zur Ausrückkraft-Reduzierung im Neuzustand; geringe Gesamttoleranz; Bauraumneutralität; Gegenüber einer konventionellen Kupplung nur eine Servofeder als Zusatzteil.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Die erfindungsgemäße Reibungskupplungseinrichtung ermöglicht eine Reduzierung einer Betätigungskraft mit verringertem Aufwand. Die erfindungsgemäße Reibungskupplungseinrichtung ermöglicht eine Ausrückkraftreduzierung mit reduziertem Aufwand. Eine Betriebssicherheit ist verbessert. Ein Einstellaufwand ist reduziert oder entfällt. Ein einwandfreies Reduzieren der Ausrückkräfte ist gewährleistet. Eine Teileanzahl ist reduziert. Eine Toleranzsituation ist verbessert. Ein wirksamer Verschleißbereich ist vergrößert. Ein Bauraumbedarf ist reduziert. Eine Adaption einer Ausrückkraftreduzierung für eine konventionelle Reibungskupplungseinrichtung ist erleichtert. Eine Servofeder ist zumindest weitestgehend mithilfe bereits vorhandener Komponenten einbindbar. Mithilfe einer Servofeder ist eine maximale Ausrücckraft niedrig gehalten und zugleich unterschreitet eine Anpresskraft einen vorgegebenen Minimalwert nicht.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine nicht erfindungsgemäße Kupplung mit einer Servofeder, die sich mit einem ersten Abstützradius an einem Gehäuse und mit einem zweiten Abstützradius an Distanzbolzen abstützt in ausschnittsweisen Ansichten,
- Fig. 2: eine nicht erfindungsgemäße Kupplung mit einer Servofeder, die sich mit einem ersten Abstützradius an einem Gehäuse und mit einem zweiten Abstützradius an Distanzbolzen mit abschnittsweise unrundem Querschnitt abstützt in ausschnittsweisen Ansichten,
- Fig. 3: eine nicht erfindungsgemäße Kupplung mit einer Servofeder, die sich mit einem ersten Abstützradius an einem Gehäuse und mit einem zweiten Abstützradius an Flachnieten mit abschnittsweise asymmetrischem Querschnitt abstützt in ausschnittsweisen Ansichten,
- Fig. 4: eine Kupplung mit einer Servofeder, die sich mit einem ersten Abstützradius an einem Gehäuse und mit einem zweiten Abstützradius an Distanzbolzen rückseitig einer Tellerfeder abstützt in ausschnittsweisen Ansichten,
- Fig. 5: eine nicht erfindungsgemäße Kupplung mit einer Servofeder, die sich mit einem ersten Abstützradius an einem Gehäuse und mit einem zweiten Abstützradius an einer Tellerfeder abstützt in ausschnittsweisen Ansichten,
- Fig. 6: eine Kupplung mit einer Servofeder, die sich mit einem ersten Abstützradius und mit einem zweiten Abstützradius an einem Gehäuse abstützt in ausschnittsweisen Ansichten,
- Fig. 7: eine nicht erfindungsgemäße Kupplung mit einer Servofeder, die sich mit einem ersten Abstützradius an einem Gehäuse und mit einem zweiten Abstützradius rückseitig an einer Tellerfeder abstützt in ausschnittsweiser Ansicht,
- Fig. 8: eine Kupplung mit einer Servofeder, die sich mit einem ersten Abstützradius an einem Gehäuse und mit einem zweiten Abstützradius an Distanzbolzen mit einem kegelförmigen Oberflächenanschnitt abstützt in ausschnittsweisen Ansichten,
- Fig. 9: eine Kupplung mit einer Servofeder, die sich mit einem ersten Abstützradius an einem Gehäuse und mit einem zweiten Abstützradius an Flachnieten mit einem rampenförmigen Oberflächenanschnitt abstützt in ausschnittsweisen Ansichten,
- Fig. 10: eine Kupplung mit einer Servofeder, die sich mit einem ersten Abstützradius und mit einem zweiten Abstützradius an einem Gehäuse abstützt in ausschnittsweisen Ansichten,
- Fig. 11: eine nicht erfindungsgemäße Kupplung mit einer Servofeder, die sich mit einem ersten Abstützradius an einem Gehäuse und mit einem zweiten Abstützradius an Stützfedern abstützt in ausschnittsweisen Ansichten,
- Fig. 12: eine Kupplung mit einer Servofeder, die sich mit einem ersten Abstützradius an einem Gehäuse und mit einem zweiten Abstützradius an Distanzbolzen mit radialem Vorsprung abstützt in ausschnittsweisen Ansichten und
- Fig. 13: Diagramme zum Verlauf einer Anpresskraft und einer Ausrückkraft bei bevorzugter Auslegung der in einer der Figuren 1 bis 12 dargestellten Servofeder.

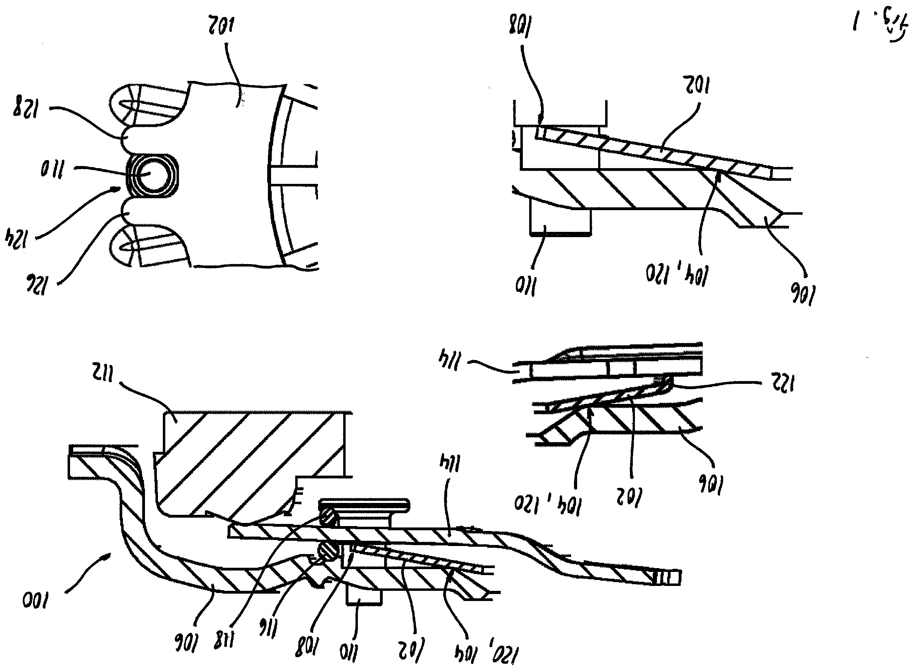

Fig. 1 zeigt eine nicht erfindungsgemäße Kupplung 100 mit einer Servofeder 102, die sich mit einem ersten Abstützradius 104 an einem Gehäuse 106 und mit einem zweiten Abstützradius 108 an Distanzbolzen, wie 110, abstützt in ausschnittsweisen Ansichten.

Die Kupplung 100 ist eine Reibungskupplung. Die Kupplung 100 ist eine Einscheiben-Trocken-Kupplung. Die Kupplung 100 ist in einem Antriebsstrang eines Kraftfahrzeugs zwischen einer Brennkraftmaschine und einem Getriebe anordenbar. Zwischen der Brennkraftmaschine und der Kupplung 100 kann ein Drehschwingungsdämpfer, insbesondere ein Zweimassenschwungrad, angeordnet sein. Die Kupplung 100 weist ein Eingangsteil und ein Ausgangsteil auf. Das Eingangsteil weist das Gehäuse 106, eine Druckplatte, die mit dem Gehäuse 106 fest verbunden ist, und eine axial relativ zu dem Gehäuse begrenzt verlagerbare Anpressplatte 112 auf. Das Eingangsteil ist mit einer Brennkraftmaschine antriebsverbindbar. Das Ausgangsteil weist eine Kupplungsscheibe mit Reibbelägen auf. Die Kupplungsscheibe ist zwischen der Druckplatte und der Anpressplatte 112 einklemmbar, um eine reibschlüssige mechanische Leistungsübertragung zwischen dem Eingangsteil und dem Ausgangsteil zu bewirken. Das Ausgangsteil ist mit dem Getriebe antriebsverbindbar. Die Kupplung 100 weist eine Betätigungseinrichtung auf. Mithilfe der Betätigungseinrichtung ist die Anpressplatte 112 zwischen einer ausgerückten Betätigungsstellung und einer eingerückten Betätigungsstellung verlagerbar.

Die Betätigungseinrichtung weist eine Tellerfeder 114 und die Servofeder 102 auf. Mithilfe einer Kraft der Tellerfeder 114 ist die Anpressplatte 112 in Schließrichtung vorgespannt beaufschlagt. Mithilfe der Betätigungseinrichtung kann eine Betätigungskraft zum Öffnen der Kupplung 100 aufgebracht werden. Eine Betätigungskraft ist der Kraft der Tellerfeder 114 entgegen gerichtet. Die Servofeder 102 ist abhängig von einem Verschleiß der Kupplung 100, insbesondere der Reibbeläge der Kupplungsscheibe, oder verschleißunabhängig bereits in einem Neuzustand wirksam. Eine Kraft der Servofeder 102 ist der Kraft der Tellerfeder 114 entgegen gerichtet. Die Kraft der Servofeder 102 unterstützt damit verschleißabhängig oder verschleißunabhängig eine Betätigung der Kupplung 100 in Öffnungsrichtung.

Die Servofeder 102 stützt sich mit einem ersten Abstützradius 104 und mit ihrem zweiten Abstützradius 108 gehäuseseitig und zusätzlich an der Tellerfeder 114 ab. Die Servofeder 102 stützt sich mit ihrem ersten Abstützradius 104 unmittelbar und mit ihrem zweiten Abstützradius 108 über die Distanzbolzen 110 mittelbar an dem Gehäuse 106 ab.

Die Tellerfeder 114 weist einen Kraftrand und Federzungen auf. Der Kraftrand weist eine ringscheibenartige Form mit einem Außenrand auf. Die Federzungen erstrecken sich ausgehend von dem Kraftrand nach radial innen. Zwischen den Federzungen sind jeweils Zwischenräume vorhanden. Die Servofeder 102 ist als Tellerfeder ausgeführt und weist eine ringscheibenartige Form mit einem Innenrand und einem Außenrand auf.

Die Tellerfeder 114 stützt sich mit ihrem Kraftrand an der Anpressplatte 112 ab. Die Tellerfeder 114 ist an dem Gehäuse 106 verschwenkbar gelagert. Zur Lagerung der Tellerfeder 114 an dem Gehäuse 106 dienen die Distanzbolzen 110. Die Distanzbolzen 110 weisen jeweils einen mehrfach gestuften Querschnitt mit einer ersten Stufe und einer zweiten Stufe auf. Die Distanzbolzen 110 weisen jeweils an der zweiten Stufe einen größeren Querschnitt als an der ersten Stufe auf. Die Distanzbolzen 110 sind jeweils an dem Gehäuse 106 befestigt und erstrecken sich nach innen in Richtung der Anpressplatte 112. Zur verschwenkbaren Lagerung der Tellerfeder 114 ist ein erster Drahtring 116 zwischen dem Gehäuse 106 und der Tellerfeder 114 und ein zweiter Drahtring 118 anpressplattenseitig der Tellerfeder 114 angeordnet. Der zweite Drahtring 118 liegt auf den zweiten Stufen der Distanzbolzen 110 auf. Der erste Drahtring 116 und der zweite Drahtring 118 sind radial außenseitig der Distanzbolzen 110 angeordnet.

Die Servofeder 102 ist mit dem ersten Abstützradius 104 an dem Gehäuse 106 verschwenkbar gelagert. Zur verschwenkbaren Lagerung der Servofeder 102 dient eine Innenkante 120 des Gehäuses 106. Die Servofeder 102 stützt sich mit ihrem zweiten Abstützradius 108 an den zweiten Stufen der Distanzbolzen 110 ab und ist damit axial gehalten. Die Servofeder 102 stützt sich mit einem dritten Abstützradius an der Tellerfeder 114 ab. Zur Abstützung an der Tellerfeder 114 weist die Servofeder 102 Abstützabschnitte 122 auf. Die Abstützabschnitte 122 sind endseitig zu der Tellerfeder 114 hin umgeformt und verrundet ausgeführt, um ein Abwälzen zu unterstützen.

Radial außenseitig weist die Servofeder 102 Ausnehmungen, wie 124, auf. Die Ausnehmungen 124 sind seitlich durch Stege, wie 126, 128, begrenzt. Die Servofeder 102 ist mit ihren Ausnehmungen 124 an den Distanzbolzen 110 angeordnet, wobei die Stege 126, 128 die Distanzbolzen 110 seitlich umgreifen. Damit ist die Servofeder 102 zentriert und in Umfangsrichtung gehalten.

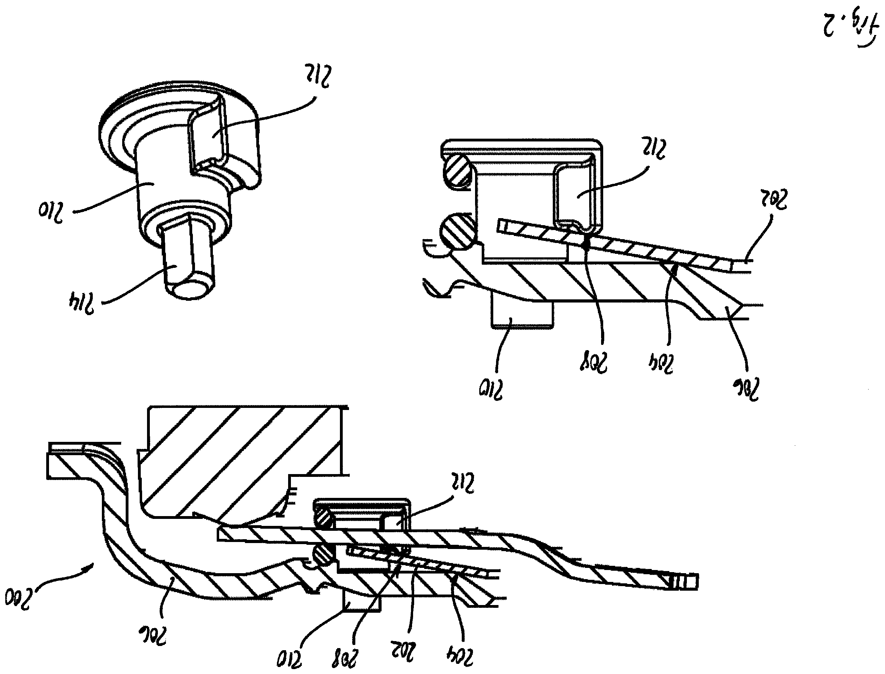

Fig. 2 zeigt eine nicht erfindungsgemäße Kupplung 200 mit einer Servofeder 202, die sich mit einem ersten Abstützradius 204 an einem Gehäuse 206 und mit einem zweiten Abstützradius 208 an Distanzbolzen, wie 210, mit abschnittsweise unrundem Querschnitt abstützt in ausschnittsweisen Ansichten. Die Distanzbolzen 210 weisen jeweils einen radialen Vorsprung 212 und einen unrunden Nietschaft 214 auf. Der Nietschaft 214 weist zwei parallele Abflachungen auf. Die unrunden Nietschafte 214 korrespondieren mit unrunden Öffnungen im Gehäuse 206. Damit ist eine Ausrichtung der Distanzbolzen 210 mit ihren Vorsprüngen 212 nach radial innen gewährleistet. Die Vorsprünge 212 dienen als Auflage zur Abstützung der Servofeder 202 mit einem zweiten Abstützradius 208. Im Übrigen wird ergänzend insbesondere auf Fig. 1 und die zugehörige Beschreibung verwiesen.

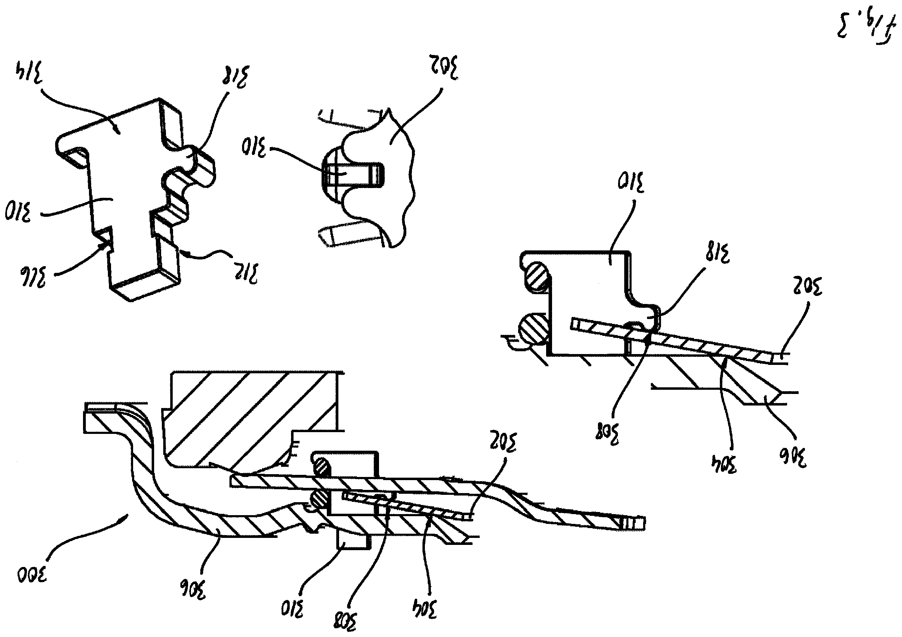

Fig. 3 zeigt eine nicht erfindungsgemäße Kupplung 300 mit einer Servofeder 302, die sich mit einem ersten Abstützradius 304 an einem Gehäuse 306 und mit einem zweiten Abstützradius 308 an Flachnieten, wie 310, mit abschnittsweise asymmetrischem Querschnitt abstützt in ausschnittsweisen Ansichten. Die Flachnieten 310 weisen jeweils zwei parallele Seitenflächen 312, 314 und eine Stufenkontur 316 auf. Die Flachnieten 310 weisen jeweils einen Vorsprung 318 auf. In dem Gehäuse 306 sind die Flachnieten 310 in korrespondieren rechteckigen Öffnungen angeordnet. Damit ist eine Ausrichtung der Flachnieten 310 mit ihren Vorsprüngen 318 nach radial innen gewährleistet. Die Vorsprünge 318 dienen als Auflage zur Abstützung der Servofeder 302 mit einem zweiten Abstützradius 308. Im Übrigen wird ergänzend insbesondere auf Fig. 1 und die zugehörige Beschreibung verwiesen.

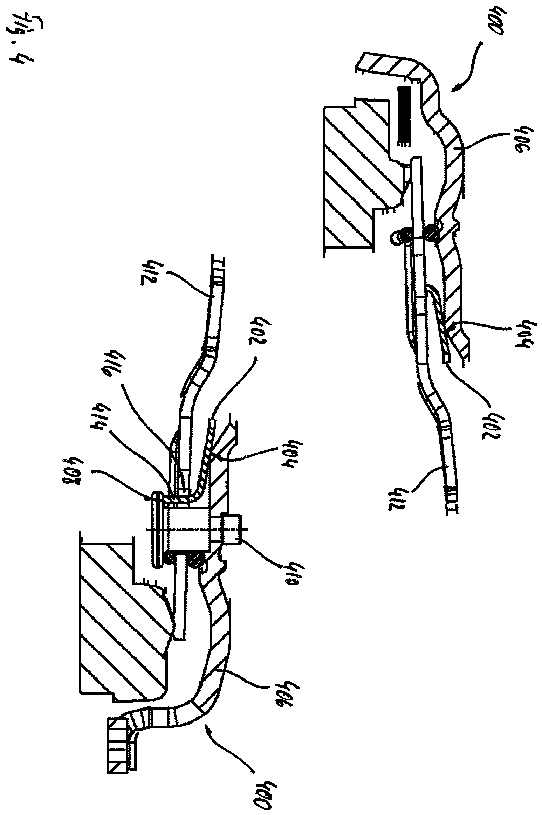

Fig. 4 zeigt eine Kupplung 400 mit einer Servofeder 402, die sich mit einem ersten Abstützradius 404 an einem Gehäuse 406 und mit einem zweiten Abstützradius 408 an Distanzbolzen, wie 410, rückseitig einer Tellerfeder 412 abstützt in ausschnittsweisen Ansichten. Radial außenseitig weist die Servofeder 402 umgeformte Auflageabschnitte, wie 414, zur Abstützung an den Distanzbolzen 410 auf. Die Tellerfeder 412 weist Öffnungen, wie 416, auf. Die Auflageabschnitte 414 ragen jeweils durch die Tellerfeder 412 hindurch zur Abstützung der Servofeder 402 mit ihrem zweiten Abstützradius 408 an Stufen der Distanzbolzen 410. Mithilfe der Auflageabschnitte 414 ist die Servofeder 402 an den Öffnungen 416 der Tellerfeder 412 zentriert. Im Übrigen wird ergänzend insbesondere auf Fig. 1 und die zugehörige Beschreibung verwiesen.

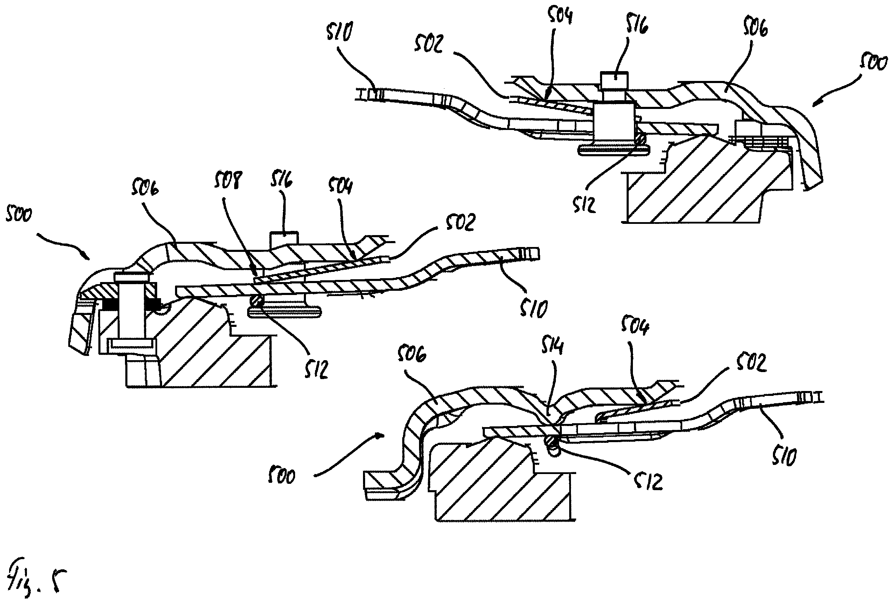

Fig. 5 zeigt eine nicht erfindungsgemäße Kupplung 500 mit einer Servofeder 502, die sich mit einem ersten Abstützradius 504 an einem Gehäuse 506 und mit einem zweiten Abstützradius 508 an einer Tellerfeder 510 abstützt in ausschnittsweisen Ansichten. Die Tellerfeder 510 stützt sich an der dem Gehäuse 506 zugewandten Seite der Tellerfeder 510 ab. Die Servofeder 502 stützt sich an der Tellerfeder 510 einem Drahtring 512 gegenüberliegend ab. Die Servofeder 502 stützt sich an der Tellerfeder 510 an einem Schwenklager ab. Damit erfolgt eine axiale Festlegung der Servofeder 502. Zur Bildung des Schwenklagers für die Tellerfeder 510 sind aus dem Gehäuse 506 Sicken, wie 514, ausgeformt. Im Bereich der Distanzbolzen, wie 516, in dem sich auch die Servofeder 502 mit ihrem zweiten Abstützradius 508 an einer Tellerfeder 510 abstützt, sind die Sicken 514 unterbrochen. Im Übrigen wird ergänzend insbesondere auf Fig. 1 und die zugehörige Beschreibung verwiesen.

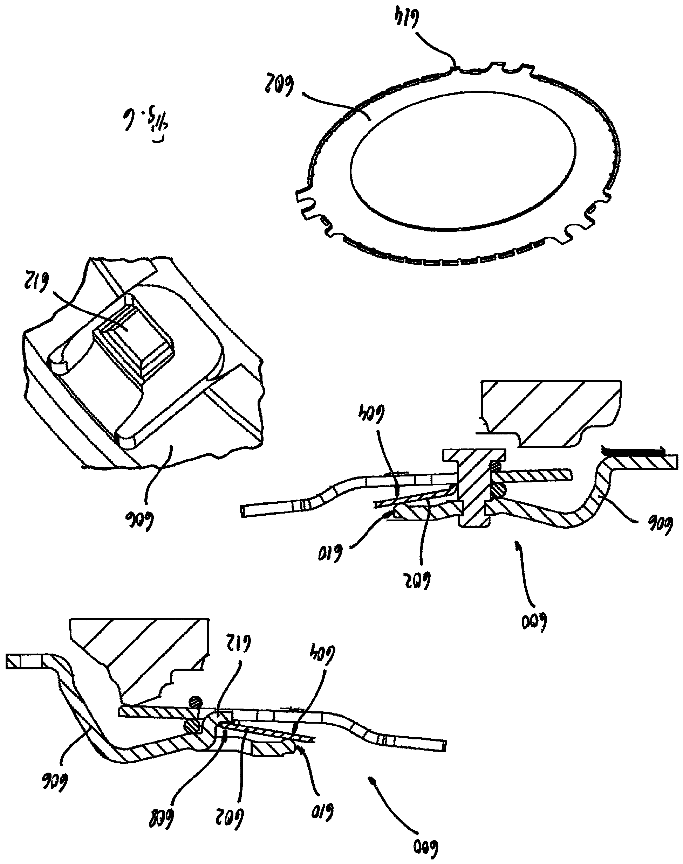

Fig. 6 zeigt eine Kupplung 600 mit einer Servofeder 602, die sich mit einem ersten Abstützradius 604 und mit einem zweiten Abstützradius 608 an einem Gehäuse 606 abstützt in ausschnittsweisen Ansichten. Das Gehäuse 606 weist einen Innenradius 610 auf, der zur Auflage der Servofeder 602 mit ihrem ersten Abstützradius 604 und als Schwenklager dient. Zur Abstützung der Servofeder 602 mit ihrem zweiten Abstützradius 608 sind aus dem Gehäuse 606 Laschen, wie 612, ausgeformt. Die Laschen 612 weisen jeweils eine L-artige Form mit einem sich axial erstreckenden Schenkel und einem sich nach radial innen erstreckenden Schenkel auf. Die Servofeder 602 stützt sich mit ihrem zweiten Abstützradius 608 an den Laschen 612 ab und ist so in axialer Richtung gehalten.

Die Servofeder 602 ist mit ihrem zweiten Abstützradius 608 mit den Laschen 612 bajonettverschlussartig verbunden. Die Servofeder 602 weist radial außenseitig Fortsätze, wie 614, auf. Die Fortsätze 614 dienen zum Eingriff in die Laschen 612. Zur Montage wird die Servofeder 602 in das Gehäuse eingelegt und derart verdreht, dass die Fortsätze 614 hinter die Laschen 612 eingreifen. Die Laschen 612 weisen Einprägungen auf, die ein unbeabsichtigtes Herausdrehen der Servofeder 602 verhindern. Im Übrigen wird ergänzend insbesondere auf Fig. 1 und die zugehörige Beschreibung verwiesen.

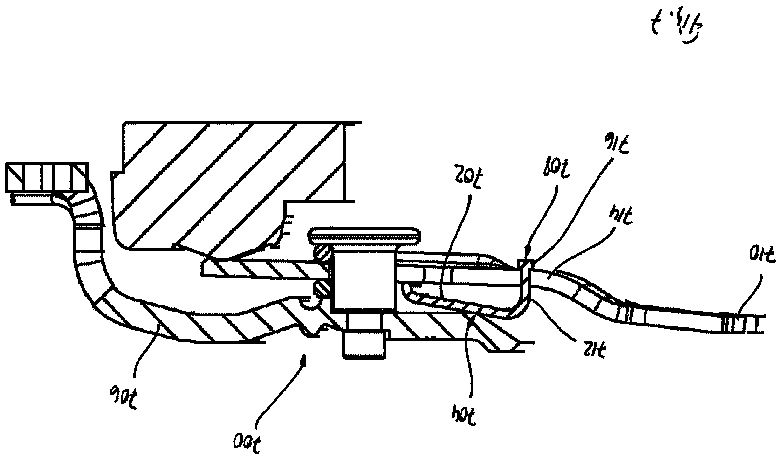

Fig. 7 zeigt eine nicht erfindungsgemäße Kupplung 700 mit einer Servofeder 702, die sich mit einem ersten Abstützradius 704 an einem Gehäuse 706 und mit einem zweiten Abstützradius 708 rückseitig an einer Tellerfeder 710 abstützt in ausschnittsweiser Ansicht. Die Servofeder 702 weist radial innenseitig zu der Tellerfeder 710 hin umgeformte Laschen, wie 712, auf. Die Laschen 712 ragen jeweils durch eine Öffnung, wie 714, der Tellerfeder 710 hindurch und weisen endseitig jeweils einen hakenartigen Hinterschnitt 716 auf. Mit den Hinterschnitten 716 stützt sich die Servofeder 702 mit ihrem zweiten Abstützradius 708 rückseitig an der Tellerfeder 710 ab und ist so axial gehalten. Die Laschen 712 sind aus ansonsten nicht benötigten Materialabschnitten hergestellt, sodass ein Verschnitt reduziert ist. Im Übrigen wird ergänzend insbesondere auf Fig. 1 und die zugehörige Beschreibung verwiesen.

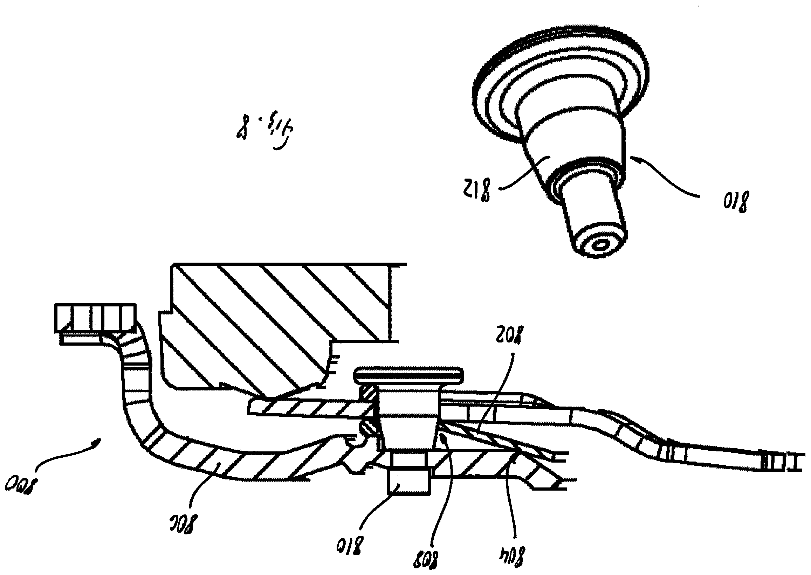

Fig. 8 zeigt eine Kupplung 800 mit einer Servofeder 802, die sich mit einem ersten Abstützradius 804 an einem Gehäuse 806 und mit einem zweiten Abstützradius 808 an Distanzbolzen 810 mit einem kegelförmigen Oberflächenanschnitt 812 abstützt in ausschnittsweisen Ansichten. Die Distanzbolzen 810 weisen jeweils eine Fase auf, die den kegelförmigen Oberflächenanschnitt 812 bildet. Eine Zentrierung der Servofeder 802 erfolgt über deren Außendurchmesser an den Distanzbolzen 810. Die Servofeder 802 weist einen einfachen Kraftrand ohne radiale Fortsätze oder Ausnehmungen auf. Die Servofeder 802 kann eine geschweißte Feder sein. Im Übrigen wird ergänzend insbesondere auf Fig. 1 und die zugehörige Beschreibung verwiesen.

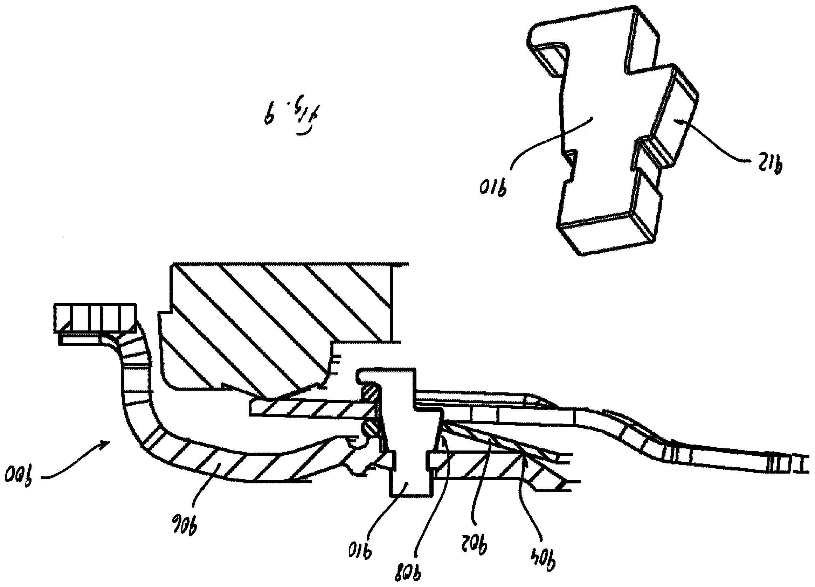

Fig. 9 zeigt eine Kupplung 900 mit einer Servofeder 902, die sich mit einem ersten Abstützradius 904 an einem Gehäuse 906 und mit einem zweiten Abstützradius 908 an Flachnieten 910 mit einem rampenförmigen Oberflächenanschnitt 912 abstützt in ausschnittsweisen Ansichten. Im Übrigen wird ergänzend insbesondere auf Fig. 1, Fig. 3 und Fig. 8 sowie die zugehörige Beschreibung verwiesen.

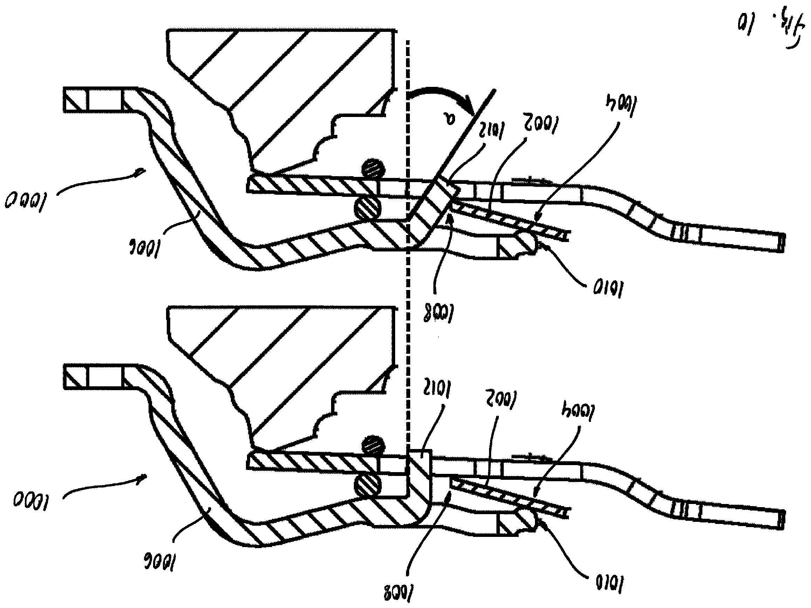

Fig. 10 zeigt eine Kupplung 1000 mit einer Servofeder 1002, die sich mit einem ersten Abstützradius 1004 und mit einem zweiten Abstützradius 1008 an einem Gehäuse 1006 abstützt in ausschnittsweisen Ansichten. Das Gehäuse 1006 weist einen Innenradius 1010 auf, der zur Auflage der Servofeder 1002 mit ihrem ersten Abstützradius 1004 und als Schwenklager dient. Zur Abstützung der Servofeder 1002 mit ihrem zweiten Abstützradius 1008 sind aus dem Gehäuse 1006 Laschen, wie 1012, ausgeformt. Die Laschen 1012 werden zunächst derart nach innen ausgeformt, beispielsweise in etwa senkrecht zum Gehäuse 1006, dass die Servofeder 1002 eingelegt werden kann. Nachfolgend werden die Laschen 1012 entsprechend dem Pfeil a nach radial innen umgeformt, sodass sich die Servofeder 1002 mit ihrem zweiten Abstützradius 1008 an den Laschen 1012 abstützt und in axialer Richtung gehalten ist. Im Übrigen wird ergänzend insbesondere auf Fig. 1 und die zugehörige Beschreibung verwiesen.

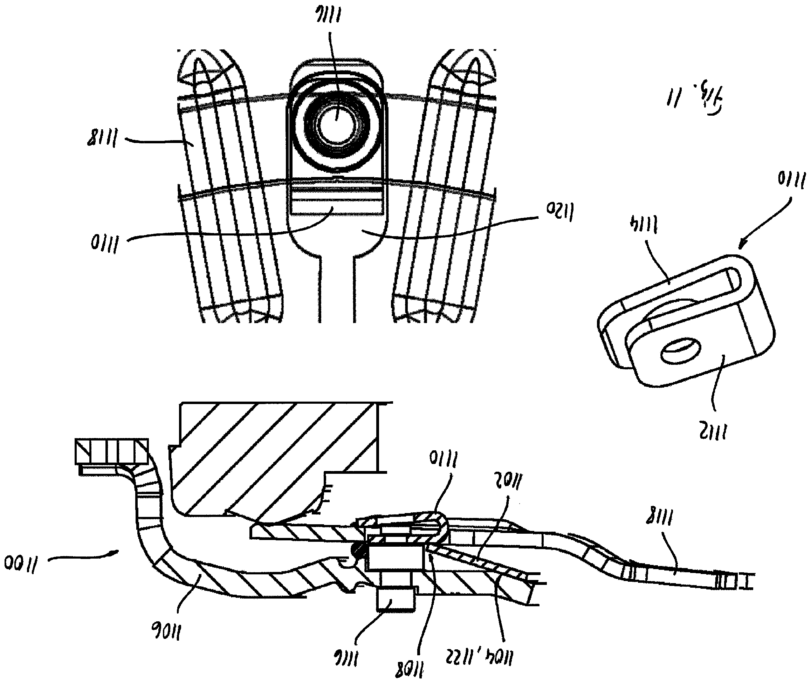

Fig. 11 zeigt eine nicht erfindungsgemäße Kupplung 1100 mit einer Servofeder 1102, die sich mit einem ersten Abstützradius 1104 an einem Gehäuse 1106 und mit einem zweiten Abstützradius 1108 an Stützfedern, wie 1110, abstützt in ausschnittsweisen Ansichten. Die Stützfedern 1110 weisen jeweils eine klammerartig gebogene Form mit zwei Schenkeln 1112, 1114 auf. Die Schenkel 1112, 1114 weisen jeweils Löcher zur Herstellung einer Nietverbindung auf. Die Stützfedern 1110 sind jeweils mit einem Schenkel 1112 mit Distanzbolzen, wie 1116, vernietet. Die anderen Schenkel 1114 dienen zur rückseitigen Abstützung einer Tellerfeder 1118 und bilden einen unteren Lagerpunkt. Die Tellerfeder 1118 weist Federfenster, wie 1120, auf. Die Stützfedern 1110 sind in den Federfenstern 1120 angeordnet. Die Servofeder 1102 stützt sich mit ihrem zweiten Abstützradius 1108 an dem Schenkel 1112 ab und ist so in axialer Richtung gehalten. Das Gehäuse 1106 weist innenseitig eine kegelförmige Anlagefläche 1122 für die Servofeder 1102 auf. Die Anlagefläche 1122 und die Servofeder 1102 weisen in einem Neuzustand der Kupplung 1100 einander entsprechende Neigungen auf. Damit ist die Servofeder 1102 zentriert. In einem Verschleißzustand entsprechen sich die Neigungen der Anlagefläche 1122 und der Servofeder 1102 nichtmehr, die Servofeder 1102 ist dann jedoch verspannt. Im Übrigen wird ergänzend insbesondere auf Fig. 1 und die zugehörige Beschreibung verwiesen.

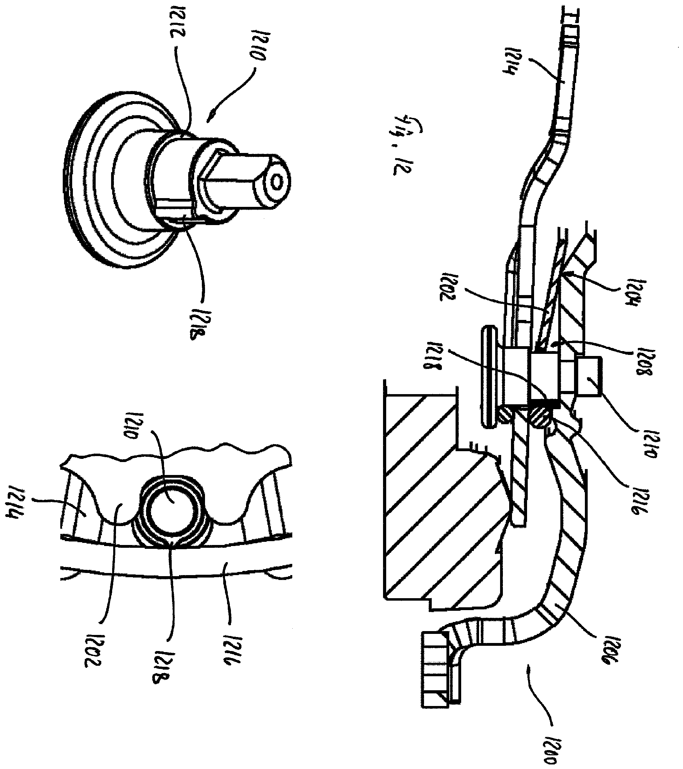

Fig. 12 zeigt eine Kupplung 1200 mit einer Servofeder 1202, die sich mit einem ersten Abstützradius 1204 an einem Gehäuse 1206 und mit einem zweiten Abstützradius 1208 an Distanzbolzen, wie 1210, mit radialen Vorsprüngen, wie 1212, abstützt in ausschnittsweisen Ansichten. Zur Schwenklagerung der Tellerfeder 1214 ist ein oberer Drahtring 1216 vorgesehen. Die Distanzbolzen 1210 weisen jeweils radial nasenartig vorstehende Abschnitte, wie 1218, auf. Die Distanzbolzen 1210 weisen jeweils abschnittsweise einen unrunden Querschnitt auf. Die Distanzbolzen 1210 sind mit ihren Abschnitten 1218 nach radial außen gerichtet an dem Gehäuse 1206 angeordnet. Zur gerichteten Anordnung an dem Gehäuse 1206 dienen die unrunden Querschnittsabschnitte der Distanzbolzen 1210. Der Drahtring 1216 ist an den nach radial außen gerichteten Abschnitten 1218 der Distanzbolzen 1210 zentriert. Die Distanzbolzen 1210 ermöglichen damit eine Zentrierung sowohl der Servofeder 1202 als auch des Drahtrings 1216. Es können alle Distanzbolzen der Kupplung 1200 wie die Distanzbolzen 1210 ausgeführt sein. Damit ist eine Variantenzahl reduziert. Im Übrigen wird ergänzend insbesondere auf Fig. 1 und die zugehörige Beschreibung verwiesen.

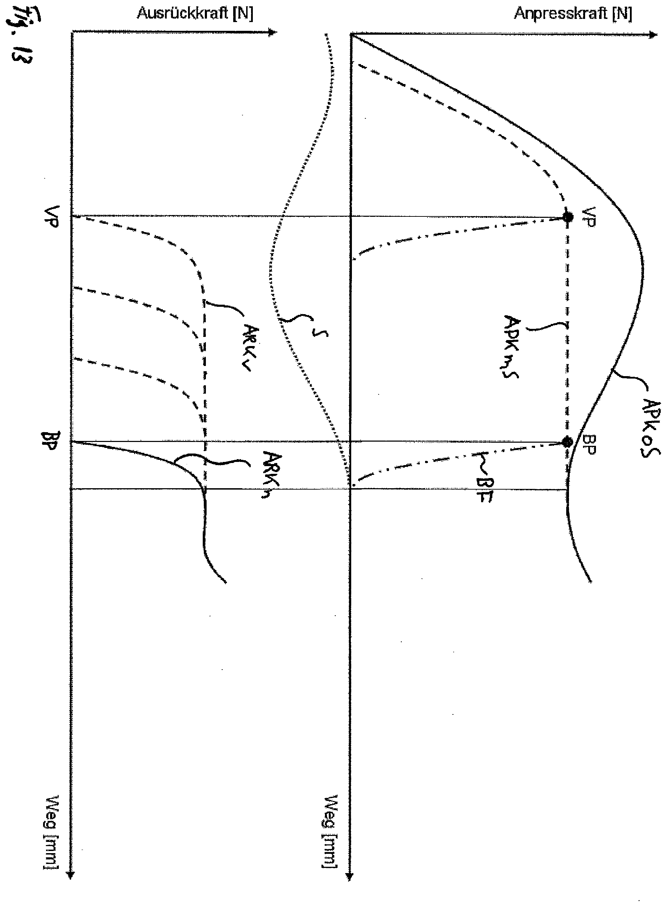

In Fig. 13 sind Diagramme zum Verlauf der Anpresskraft (oben) und der Ausrückkraft (unten) durch eine bevorzugte Auslegung einer der in den vorangegangenen Ausführungsbeispielen beschriebenen Servofeder dargestellt.

Mit dem Bezugszeichen APKoS ist die Anpresskraftkennlinie ohne Servofeder dargestellt. Wenn Kupplungsverschleiß vorliegt, das heißt wenn sich die Anpressplatte weiter auf die Gegendruckplatte zubewegen muss, um die dünner werdenden Reibbeläge der Kupplungsscheibe reibschlüssig zu klemmen, steigt die Kennlinie APKoS an, da man sich im Diagramm vom Betriebspunkt BP ausgehend nach links bewegt.

Mit dem Bezugszeichen APKmS ist die Anpresskraftkennlinie mit Servofeder dargestellt, während mit dem Bezugszeichen S die Servofederkennlinie dargestellt ist. Das Bezugszeichen BF stellt die Kennlinie der Belagfederung der Kupplungsscheibe dar. Die Servofederkennlinie S ist derart ausgebildet, dass die Kennlinie APKmS sowie auch die entsprechenden Ausrückkraftkennlinien ARKn, ARKv im Neuzustand und im Verschleißzustand im Wesentlichen plateauförmig, ggf. leicht ansteigend oder abfallend, ausgebildet sind, das heißt zwischen dem Betriebspunkt BP im Neuzustand der Kupplung und dem Verschleißpunkt VP im Verschleißzustand der Kupplung auf einem konstanten, das heißt im Wesentlichen gleichbleibenden Kraftniveau verlaufen.

Die Servofeder ist in den vorangegangenen Ausführungsbeispielen vorzugsweise ausgebildet, im Minimum der von der Tellerfeder erzeugten Anpresskraft, das heißt im Minimum der Kennlinie APKoS anzugreifen. Die Servofeder wirkt der Tellerfeder entgegen und sorgt durch ihre bevorzugte Ausbildung dafür, dass die Kennlinie APKmS zwischen dem Betriebspunkt BP und dem Verschleißpunkt VP nicht unter dieses Minimum fällt. Somit lässt sich über die Lebensdauer der Kupplung z.B. am Kupplungspedal oder am Kupplungsaktor ein gleichbleibendes Kraftniveau erzeugen, da die Ausrückkräfte im System konstant bleiben.

## Patentansprüche

1. Reibungskupplungseinrichtung (400, 600) für einen Antriebsstrang eines brennkraftmaschinengetriebenen Kraftfahrzeugs, aufweisend eine Drehachse, ein Gehäuse (406, 606), wenigstens eine zu einer Betätigung zwischen einer eingerückten Betätigungsstellung und einer ausgerückten Betätigungsstellung relativ zu dem Gehäuse (406, 606) in Erstreckungsrichtung der Drehachse verlagerbare Anpressplatte (112), eine Tellerfeder (412) zur Beaufschlagung der wenigstens einen Anpressplatte (112) und eine Servofeder (402, 602) zur Reduzierung einer Betätigungskraft, wobei sich die Servofeder (402, 602) auf einem ersten Abstützradius (404, 604) unmittelbar am Gehäuse (406, 606) abstützt und sich zusätzlich an der Tellerfeder (412) abstützt, **dadurch gekennzeichnet, dass** die Servofeder (402, 602) radial außenseitig auf einem zweiten Abstützradius (408, 608) auf am Gehäuse (406) angeordneten Distanzbolzen (410), durch die die Tellerfeder (412) am Gehäuse (406, 606) verschwenkbar gelagert ist, oder auf am Gehäuse (606) angeordneten Laschen (612) aufliegt und so in axialer Richtung gehalten ist.

2. Reibungskupplungseinrichtung (400) nach Anspruch 1, wobei die Servofeder (402) radial außenseitig laschenartige Abstützabschnitte (414) aufweist, die zur Abstützung an den Distanzelementen (410) jeweils durch die Tellerfeder (412) hindurch ragen.

3. Reibungskupplungseinrichtung (600) nach Anspruch 1, wobei die Servofeder (602) radial außenseitig Fortsätze (614) aufweist, die mit den Laschen (612) des Gehäuses (606) bajonettverschlussartig korrespondieren.

4. Reibungskupplungseinrichtung (400, 600) nach einem der Ansprüche 1 bis 3, wobei die Servofeder (402, 602) radial außenseitig Ausnehmungen (124) aufweist, die mit den Distanzbolzen (410) oder den Laschen (612) korrespondieren.

5. Reibungskupplungseinrichtung (400, 600) nach einem der Ansprüche 1 bis 4, wobei die Servofeder (402, 602) zur zusätzlichen Abstützung an der Tellerfeder (412) Auflageabschnitte (122) aufweist, die durch abschnittsweises Umformen der Servofeder (402, 602) gebildet sind.

6. Reibungskupplungseinrichtung (600) nach einem der Ansprüche 1 bis 5, wobei das Gehäuse (606) zur Abstützung der Tellerfeder (412) abschnittsweise sickenartig umgeformt ist und/oder zur Abstützung der Servofeder (602) mit dem zweiten Abstützradius (608) umformbare Laschen (612) aufweist.

## Claims

1. Friction clutch device (400, 600) for a drive train of a motor vehicle which is driven by internal combustion engine, having a rotational axis, a housing (406, 606), at least one pressure plate (112) which can be moved relative to the housing (406, 606) in the direction of extent of the rotational axis for an actuation between an engaged actuating position and a disengaged actuating position, a cup spring (412) for loading the at least one pressure plate (112), and a servo spring (402, 602) for reducing an actuating force, the servo spring (402, 602) being supported directly on the housing (406, 606) on a first supporting radius (404, 604) and additionally being supported on the cup spring (412), **characterized in that** the servo spring (402, 602) lies radially on the outer side on a second supporting radius (408, 608) on spacer pins (410) which are arranged on the housing (406) and by way of which the cup spring (412) is mounted pivotably on the housing (406, 606), or lies on lugs (612) which are arranged on the housing (606) and is thus held in the axial direction.

2. Friction clutch device (400) according to Claim 1, the servo spring (402) having, radially on the outer side, lug-like supporting sections (414) which protrude in each case through the cup spring (412) for supporting on the spacer elements (410).

3. Friction clutch device (600) according to Claim 1, the servo spring (602) having, radially on the outer side, projections (614) which correspond with the lugs (612) of the housing (606) in a bayonet lock-like manner.

4. Friction clutch device (400, 600) according to one of Claims 1 to 3, the servo spring (402, 602) having, radially on the outer side, recesses (124) which correspond with the spacer pins (410) or the lugs (612).

5. Friction clutch device (400, 600) according to one of Claims 1 to 4, the servo spring (402, 602) having, for additional support on the cup spring (412), rest sections (122) which are formed by reshaping of the servo spring (402, 602) in sections.

6. Friction clutch device (600) according to one of Claims 1 to 5, the housing (606) being reshaped in a bead-like manner in sections for the support of the cup spring (412) and/or having lugs (612) which can be reshaped for the support of the servo spring (602) with the second supporting radius (608).

## Revendications

1. Dispositif d'embrayage à friction (400, 600) pour une chaîne cinématique d'un véhicule automobile mû par un moteur à combustion interne, présentant un axe de rotation, un boîtier (406, 606), au moins une plaque de pression (112) déplaçable par rapport au boîtier (406, 606) dans la direction d'extension de l'axe de rotation pour un actionnement entre une position d'actionnement embrayée et une position d'actionnement débrayée, une rondelle élastique (412) pour la sollicitation de ladite au moins une plaque de pression (112) et un ressort asservi (402, 602) pour la réduction d'une force d'actionnement, dans lequel le ressort asservi (402, 602) prend appui directement sur le boîtier (406, 606) sur un premier rayon d'appui (404, 604) et prend appui en outre sur la rondelle élastique (412), **caractérisé en ce que** le ressort asservi (402, 602) s'applique radialement à l'extérieur sur un deuxième rayon d'appui (408, 608) sur des boulons d'écartement (410) disposés sur le boîtier (406), par lesquels la rondelle élastique (412) est montée de façon pivotante sur le boîtier (406, 606), ou sur des pattes (612) disposées sur le boîtier (606), et il est ainsi maintenu en direction axiale.

2. Dispositif d'embrayage à friction (400) selon la revendication 1, dans lequel le ressort asservi (402) présente radialement à l'extérieur des parties d'appui en forme de pattes (414), qui pénètrent chacune à travers la rondelle élastique (412) pour l'appui sur les éléments d'écartement (410).

3. Dispositif d'embrayage à friction (600) selon la revendication 1, dans lequel le ressort asservi (602) présente radialement à l'extérieur des prolongements (614), qui correspondent aux pattes (612) du boîtier (606) à la manière d'un verrou à baïonnette.

4. Dispositif d'embrayage à friction (400, 600) selon l'une quelconque des revendications 1 à 3, dans lequel le ressort asservi (402, 602) présente radialement à l'extérieur des évidements (124), qui correspondent aux boulons d'écartement (410) ou aux pattes (612).

5. Dispositif d'embrayage à friction (400, 600) selon l'une quelconque des revendications 1 à 4, dans lequel le ressort asservi (402, 602) présente pour un appui supplémentaire sur la rondelle élastique (412) des parties d'appui (122), qui sont formées par déformation locale du ressort asservi (402, 602).

6. Dispositif d'embrayage à friction (600) selon l'une quelconque des revendications 1 à 5, dans lequel le boîtier (606) est déformé localement en forme de moulure pour l'appui de la rondelle élastique (412) et/ou présente des pattes déformables (612) pour l'appui du ressort asservi (602) avec le deuxième rayon d'appui (608) .
